Europäisches Patentamt

European Patent Office

Office européen des brevets

(19)

(11) Numéro de publication: **0 347 984**
**A1**

## (12) DEMANDE DE BREVET EUROPEEN

(21) Numéro de dépôt: **89201553.8**

(22) Date de dépôt: **15.06.89**

(51) Int. Cl.⁴: **H04N 7/00 , H04N 7/13**

(30) Priorité: **21.06.88 FR 8808301**

(43) Date de publication de la demande:
**27.12.89 Bulletin 89/52**

(84) Etats contractants désignés:
**AT BE CH DE ES FR GB GR IT LI LU NL SE**

(71) Demandeur: **LABORATOIRES D'ELECTRONIQUE ET DE PHYSIQUE APPLIQUEE L.E.P.**
**3, Avenue Descartes**
**F-94450 Limeil-Brévannes(FR)**

(84) **FR**

Demandeur: **N.V. Philips' Gloeilampenfabrieken**
**Groenewoudseweg 1**
**NL-5621 BA Eindhoven(NL)**

(84) **BE CH DE ES GB GR IT LI LU NL SE AT**

(72) Inventeur: **Haghiri, Mohammad**
**SOCIETE CIVILE S.P.I.D. 209 rue de l'Université**
**F-75007 Paris(FR)**
Inventeur: **Guichard, Philippe**
**SOCIETE CIVILE S.P.I.D. 209 rue de l'Université**
**F-75007 Paris(FR)**

(74) Mandataire: **Caron, Jean et al**
**SOCIETE CIVILE S.P.I.D. 209, rue de l'Université**
**F-75007 Paris(FR)**

(54) **Système de traitement d'images de télévision à estimateur de vitesses amélioré et à débit de données réduit.**

(57) Un estimateur de vitesse pour le traitement d'images de télévision comporte un dispositif qui intervient après que des vitesses aient été estimées pour une image (51), lorsqu'il s'agit d'estimer les vitesses dans une image suivante (53). Ce dispositif associe à une partie (R) examinée dans une image (53) un groupe (5) de plusieurs parties d'une image antérieure (51), groupe qui contient la partie occupant dans l'image la même position que la partie examinée et également les parties voisines, et recherche si l'une des neuf vitesses déterminées pour les neuf parties dudit groupe (5) peut s'appliquer à la partie R. Si c'est le cas, le travail de l'estimateur est terminé pour la partie (R) examinée et en outre la transmission de la vitesse pour cette partie est alors réalisée non pas en transmettant la valeur de la vitesse, mais en désignant celle des parties du groupe (5) dont la vitesse convient.

FIG. 4

## Système de traitement d'images de télévision à estimateur de vitesses amélioré et à débit de données réduit.

La présente invention concerne un système de traitement d'images de télévision, dans lequel l'image est divisée en plusieurs parties pour chacune desquelles un mode de transmission des données vidéo faisant usage d'un vecteur-vitesse est susceptible d'être utilisé, le système étant muni par conséquent d'un estimateur de vitesse pour déterminer un vecteur-vitesse pour chacune des parties d'une image, et de moyens pour transmettre sur voie de transmission numérique associée des données définissant tous les vecteurs-vitesse des parties pour lesquelles un tel vecteur est utilisé.

Elle concerne aussi un procédé de traitement d'images de télévision, dans lequel l'image est divisée en plusieurs parties pour chacune desquelles un mode de transmission des données vidéo faisant usage d'un vecteur-vitesse est susceptible d'être utilisé, selon lequel on examine chacune des parties d'une image pour y déterminer un vecteur-vitesse, et on transmet sur une voie de transmission numérique associée des données définissant tous les vecteurs-vitesse des parties pour lesquelles un tel vecteur est utilisé.

Elle concerne aussi un appareil de reproduction d'images de télévision, dans lequel l'image est divisée en plusieurs parties pour chacune desquelles un mode de reproduction des données vidéo faisant usage d'un vecteur vitesse est susceptible d'être utilisé, la définition du vecteur-vitesse étant reçue pour chacune des parties d'image à traiter dans ce mode, récepteur muni de moyens pour créer, à partir des vecteurs-vitesse, une image intermédiaire entre deux images reçues consécutivement, ces moyens comprenant notamment une ou plusieurs mémoires pour enregistrer les coordonnées des vecteurs-vitesse.

La présente invention peut être utilisée dans des systèmes d'émission-réception de télévision à haute définition ou ordinaires, dans des systèmes d'enregistrement d'images, par exemple ceux utilisant un disque à lecture laser, et en général dans les systèmes de traitement numérique d'images.

Un tel système dit DATV (Digitally Assisted Television, en langue anglaise) dans lequel des données complémentaires et notamment des vecteurs-vitesse sont transmises par voie numérique, est connu par la conférence intitulée "Motion compensated interpolation applied to HD. MAC pictures encoding and decoding" par M.R. Haghiri et F. Fonsalas, présentée au "2nd International workshop on signal processing of HDTV", l'Aquila, 29 Fev.- 3 Mars 1988.

Dans le système proposé par ce document, le signal à transmettre est engendré par une caméra 50 Hz à image entrelacée à 1152 lignes avec 1440 pixels par ligne. Ce signal est supposé échantillonné à 54 MHz, ce qui est quatre fois la fréquence indiquée dans l'avis 601 du CCIR. Un codage est utilisé pour réduire la fréquence d'échantillonnage d'un facteur 4, avec un débit de données numériques associé le plus réduit possible. A cet effet l'image est divisée en plusieur parties, ici des carrés de 16 x 16 pixels, et pour chaque carré, un mode de transmission peut être choisi parmi plusieurs, l'un de ces modes faisant usage d'un vecteur-vitesse.

Ce document décrit aussi un estimateur de vitesse du type BMA (en langue anglaise : Block Matching Algorithm) c'est à dire comportant des moyens pour, en présence d'un couple d'images successives, examiner une partie d'une des images en la comparant tour à tour avec une série de parties de l'autre image pour rechercher une identité ou une similitude, ces parties occupant une série de positions telles que, si elles étaient déplacées chacune selon l'un des vecteurs-vitesse envisageables, elles viendraient coïncider avec la partie examinée. Dans l'exemple décrit on procède à dix sept comparaisons successives pour estimer une vitesse, avec des déplacements maximals de ± 3 pixels. Le nombre de comparaisons croît à peu près comme le carré de l'amplitude maximale des déplacements et la méthode devient donc rapidement inutilisable pour de grandes vitesses.

L'invention permet d'arriver plus rapidement à l'estimation de la vitesse des objets dans chacune des parties d'image du fait que l'estimateur de vitesses comporte des moyens pour, en présence d'une série d'images se succédant au cours du temps, associer à une partie examinée dans une image un groupe de plusieurs parties d'une image antérieure, groupe qui contient la partie occupant la même position géométrique que la partie examinée ainsi que les parties voisines, et des moyens pour choisir le vecteur-vitesse pour la susdite partie examinée parmi ceux déterminés pour les différentes parties du susdit groupe, dans l'image antérieure.

Pour la même raison, selon le procédé de l'invention, on associe à une partie examinée dans une image un groupe de plusiers parties d'une image antérieure, groupe qui contient la partie occupant la même position géométrique que la partie examinée ainsi que les parties voisines, et on choisit le vecteur-vitesse pour la susdite partie examinée parmi ceux déterminés pour les différentes parties du susdit groupe, dans l'image antérieure.

Il est important de noter que, pour la détermination des vitesses d'une image antérieure, n'importe quel type d'estimateur de vitesses peut être utilisé, et donc pas obligatoirement un estimateur de type BMA.

Après l'estimation de la vitesse ainsi réalisée, il importe de vérifier si cette estimation permet d'obtenir la meilleure image. A cet effet des moyens sont prévus pour réaliser un décodage simulant le décodage en réception et déterminer, par comparaison entre l'image décodée et l'original, le degré de qualité de la partie d'image en cours de traitement, munie du vecteur-vitesse choisi.

Dans le cas où l'estimation de vitesse a été déterminée par les moyens ci-dessus, il est possible de gagner sur le débit de la voie numérique associée en utilisant des moyens de transmission de la vitesse qui indiquent quelle est la partie du susdit groupe dont le vecteur-vitesse correspondant à l'image antérieure a été choisi pour la partie examinée.

Le mode qui fait usage d'un vecteur-vitesse peut être utilisé pour des vitesses maximales assez grandes. De ce fait le nombre de bits nécessaire pour transmettre la valeur de la vitesse locale est grand, et cette transmission pourrait consommer une partie notable de la capacité de transmission numérique et même la dépasser. Dans le cas où pour une raison quelconque, on ne désire pas utiliser un estimateur de vitesses tel que décrit plus haut, il est néanmoins possible d'utiliser l'invention pour obtenir une réduction du débit numérique de la voie numérique associée.

A cet effet un système où l'on choisit un mode de transmission des données vidéo parmi au moins deux modes qui diffèrent l'un de l'autre par la structure d'échantillonnage, le premier mode faisant usage d'un vecteur-vitesse cependant que, dans le deuxième mode, une image est décrite plus vite que dans le premier mode, mais avec une définition spatiale inférieure, ce système étant muni de de moyens pour transmettre, sur une voie numérique associée, des données définissant le mode choisi pour chacune des parties et tous les vecteurs-vitesse des parties pour lesquelles le premier mode est choisi, est avantageusement muni de moyens pour, lors de l'examen d'une partie d'image pour laquelle le premier mode a été jusqu'à présent choisi, associer à cette partie un groupe de plusieurs parties d'une image antérieure, groupe qui contient la partie occupant la même position que la partie examinée et également les parties voisines, et de moyens pour rechercher si l'un des vecteurs-vitesses déterminés pour les parties de l'image antérieure qui font partie dudit groupe peut convenir pour ladite partie examinée et dans ce cas confirmer le choix du premier mode et transmettre une donnée identifiant quel est l'élément du groupe dont le vecteur-vitesse de l'image antérieure convient pour la partie examinée, et dans le cas contraire, c'est-à-dire lorsqu'aucun vecteur dudit groupe ne peut convenir, déclencher le choix du deuxième mode pour la transmission de la partie examinée.

Dans le même but, selon un procédé de traitement d'images de télévision, dans lequel l'image est divisée en plusieurs parties pour chacune desquelles est choisi un mode de transmission des données vidéo parmi au moins deux modes qui diffèrent l'un de l'autre par la structure d'échantillonnage, le premier mode faisant usage d'un vecteur-vitesse cependant que, dans le deuxième mode, une image est décrite plus vite que dans le premier mode, mais avec une définition spatiale inférieure, procédé selon lequel on examine chacune des parties d'image pour y déterminer un vecteur-vitesse et on transmet, sur une voie numérique associée, des données définissant le mode choisi pour chacune des parties et tous les vecteurs-vitesse des parties pour lesquelles le premier mode est choisi, il est avantageux que, lors de l'examen d'une partie d'image pour laquelle le premier mode a été jusqu'à présent choisi, on associe à cette partie un groupe de plusieurs parties d'une image antérieure, groupe qui contient la partie occupant la même position géométrique que la partie examinée ainsi que les parties voisines, et on recherche si l'un des vecteurs-vitesse déterminés pour les parties de l'image antérieure qui font partie dudit groupe peut convenir pour ladite partie examinée et dans ce cas on confirme le choix du premier mode et on transmet une donnée identifiant quel est l'élément du groupe dont le vecteur-vitesse de l'image antérieure convient pour la partie examinée, et dans le cas contraire, c'est-à-dire lorsqu'aucun vecteur dudit groupe ne peut convenir, on déclenche le choix du deuxième mode pour la transmission de la partie examinée.

Dans une première variante, un vecteur-vitesse est jugé pouvoir convenir s'il y a identité entre ses coordonnées et celles du vecteur-vitesse déterminé pour la partie examinée.

Dans une seconde variante, le vecteur-vitesse du groupe de l'image antérieure dont la différence avec le vecteur-vitesse déterminé pour la partie examinée est la plus faible ou bien est inférieure à un seuil prédéterminé est jugé pouvoir convenir si des moyens, prévus pour réaliser un décodage simulant le décodage en réception et déterminer, par comparaison entre l'image décodée et l'original, le choix du mode le plus satisfaisant pour la partie examinée munie dudit vecteur-vitesse du groupe de l'image antérieure, confirment que le premier mode peut être choisi.

Une réduction importante peut encore être obtenue si l'on combine les moyens de l'invention avec une réduction du nombre de vecteurs-vitesse transmis, basée sur un relevé statistique. A cet effet, un système selon l'invention est notamment remarquable en ce qu'il comporte des moyens pour déterminer, lors du traitement de l'image dite antérieure, dans l'ensemble des vecteurs-vitesse, un sous-ensemble contenant les vecteurs qui sont rencontrés le plus souvent dans cette image, et des moyens pour transmettre numériquement une fois par image les caractéristiques de tous les vecteurs de ce sous-ensemble, en ce que si le vecteur-vitesse d'une partie d'image dite antérieure est un élément du sous-ensemble, le premier mode est utilisé pour cette partie d'image et le vecteur-vitesse est défini par référence au sous-ensemble, alors que si ce vecteur-vitesse n'est pas un élément du sous-ensemble, le deuxième mode est utilisé, et en ce que, lors du susdit examen d'une partie d'image pour laquelle le premier mode a été jusqu'à présent choisi, le contenu du susdit groupe de parties de l'image précédente est limité aux parties pour lesquelles le premier mode a été utilisé.

Pour tirer parti des avantages de l'invention, l'appareil de reproduction est avantageusement muni de moyens pour, lors de la création d'une partie d'une image, à partir d'une donnée numérique reçue identifiant une partie d'une image antérieure, trouver le vecteur-vitesse de l'image antérieure, correspondant à cette partie, dans ladite mémoire, et l'appliquer à la partie en cours de création.

La description qui va suivre, en regard des dessins annexés décrivant des exemples non limitatifs fera bien comprendre comment l'invention peut être réalisée.

La figure 1 illustre un mode de définition d'un vecteur-vitesse.

La figure 2 est un schéma bloc de l'ensemble des circuits de codage d'un système d'émission.

La figure 3 illustre la définition de différentes images mentionnées dans la description de l'invention.

La figure 4 représente des parties d'image dans deux images différentes successives.

La figure 5 est un schéma bloc détaillé d'éléments de circuit servant à la mise en oeuvre d'une partie de l'invention.

La figure 6 est un schéma bloc détaillé d'éléments de circuit servant à la mise en oeuvre d'une autre partie de l'invention.

La figure 7 est un schéma détaillé de l'élément 24 de la figure 6.

La figure 8 illustre un algorithme de détermination d'un vecteur-vitesse.

Le système décrit ici à titre d'exemple a pour but de transmettre des images issues de générateurs à 1152 lignes utiles, de 1440 pixels chacune, en utilisant seulement une bande passante vidéo égale à celle d'un standard à 625 lignes (576 lignes utiles de 720 pixels).

Pour permettre de reconstituer une partie des informations vidéo manquantes, des données numériques sont associées aux données vidéo.

Pour la transmission des signaux vidéo, trois modes différents sont utilisés.

Dans un mode "80 ms", à l'aide d'un filtrage numérique approprié, on transmet par exemple d'abord durant une période de 20 ms les pixels impairs des lignes impaires, durant les 20 ms suivantes les pixels impairs des lignes paires, durant les 20 ms suivantes les pixels pairs des lignes impaires, puis enfin les pixels pairs des lignes paires, le temps utilisé pour transmettre totalement une image étant donc de 80 ms. Néanmoins durant chaque période de 20 ms, toute la surface d'une image est décrite, ce qui permet la compatibilité avec les standards anciens à 625 lignes. En recombinant de manière appropriée les pixels décrits au cours de quatre périodes consécutives de 20 ms chacune, on peut recréer une image à haute définition. Pour cela il faut que l'image source n'ait pratiquement pas varié au cours des 80 ms. Ce mode s'applique donc aux images fixes ou quasi-fixes.

Dans un mode "40 ms", toujours après filtrage numérique approprié, on ne transmet par exemple que les lignes paires, dont on transmet, en deux fois, tous les pixels. Pendant une période de 20 ms on transmet les pixels impairs, puis pendant la période suivante les pixels pairs (on pourrait aussi imaginer de ne transmettre qu'un pixel sur deux, mais pour toutes les lignes). On a donc perdu la moitié de la définition, mais l'image est décrite en 40 ms, c'est-à-dire deux fois plus vite que dans le mode "80ms", ce qui autorise certains mouvements.

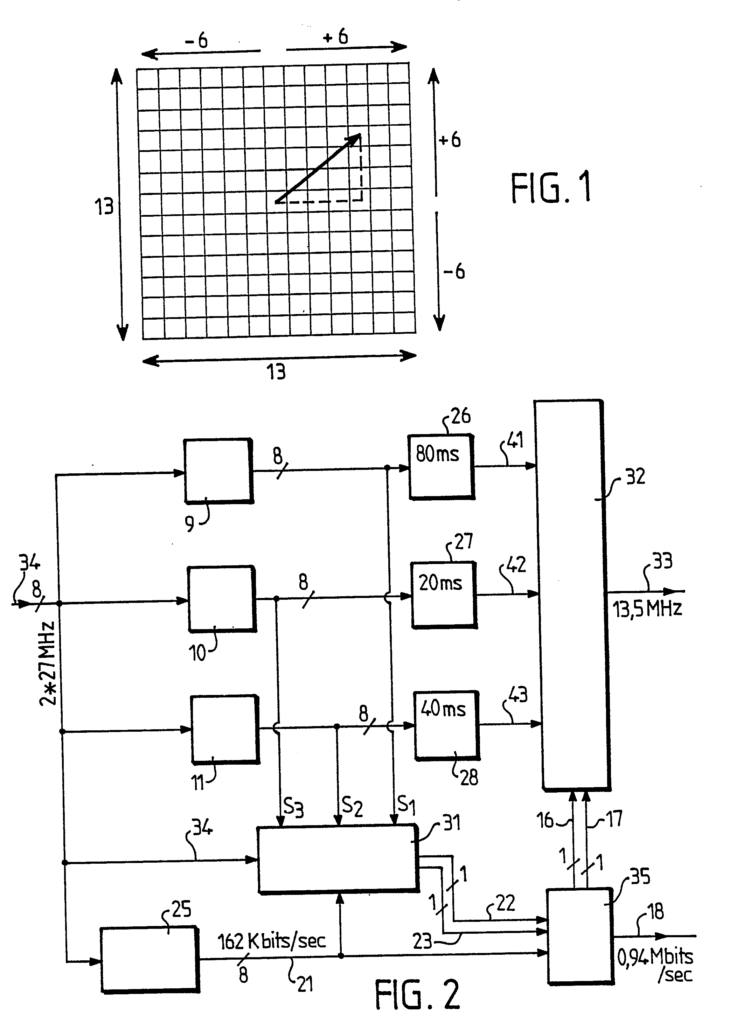

Dans ce mode "40 ms", on dispose en outre d'un vecteur-vitesse pour chaque partie d'image. La figure 1 montre un vecteur vitesse, qui représente le déplacement d'un objet dans l'image au cours du temps, et qui a ici des coordonnées x = +4, y = +3 exprimées en pixels/40ms. Si on s'impose de ne pas traiter de coordonnées supérieures à ± 6 pixels, chaque vecteur-vitesse envisageable correspond au chemin à parcourir entre le pixel central origine du vecteur et l'un des pixels représentés chacun par un des carrés du damier de 13 x 13 qui est illustré par la figure 1, ce qui représente 169 vecteurs possibles.

Le vecteur-vitesse permet de créer dans le récepteur une image intermédiaire et de l'insérer temporellement entre deux images transmises. Pour créer une image intermédiaire, on part d'une image transmise, et on y déplace les parties mobiles selon le vecteur-vitesse afférent, indiqué par l'émetteur. On peut aussi se servir des deux images entre lesquelles il s'agit d'insérer une image supplémentaire. Pour plus de détails sur la manière de recréer cette image, on peut se reporter à la publication mentionnée en préambule. Grâce à l'image ainsi ajoutée, on double encore la définition temporelle de l'image, ce qui permet d'utiliser ce mode même lorsque des vitesses importantes existent dans l'image. Néanmoins

4

l'image intermédiaire n'est correcte que si les vitesses sont stables ou quasi-stables. Dans le cas contraire où de grandes accélérations sont présentes, on utilise un troisième mode "20ms".

Dans le mode "20 ms", on transmet seulement, pendant une période de 20 ms, par exemple les pixels impairs des lignes impaires, et au cours des 20 ms suivantes, on transmet de façon identique une nouvelle image. Ainsi la définition temporelle est excellente du fait que la fréquence de répétition des images est de 50 Hz, ce qui permet la transmission de tous les mouvements sans effets de flou ou de mouvement saccadé. Par contre la définition spatiale est faible (on n'a transmis qu'un pixel sur quatre) et correspond à celle du standard à 625 lignes. Ceci n'est pas trop gênant, car l'oeil est moins sensible à l'absence de définition spatiale lorsque les objets observés se déplacent rapidement.

L'image est divisée en parties, par exemple ici des carrés de 16 x 16 pixels, et pour chacune de ces parties ou "blocs", un mode différent peut être utilisé. Aussi dans le cas d'objets mobiles devant un paysage de fond, ce dernier pourra être décrit avec tous ses détails en mode "80 ms", cependant qu'à l'intérieur de polygones constitués de carrés de 16 x 16 pixels et entourant au plus près les objets mobiles, un mode "40 ms" ou "20 ms" sera localement utilisé.

En outre, pour simplifier le traitement des données, on convient de traiter les séquences d'images dans le cadre d'intervalles de temps invariables de 80 ms, et de ne pas diviser ces 80 ms en plus de deux phases différentes. Chaque intervalle de 80 ms est traité comme un tout autonome, c'est-à-dire indépendant des intervalles voisins.

La figure 2 représente un schéma bloc d'un système de codage à l'émission, afin de définir le contexte de l'invention ainsi que sa situation matérielle.

Les images arrivent séquentiellement, selon un balayage par lignes, sur la connexion 34. Elles sont traitées simultanément par trois voies en parallèle, respectivement (9, 26), (10, 27), (11, 28).

La voie "80 ms" comporte en cascade un élément de prétraitement 9, et un circuit d'échantillonnage 26 réalisant un "sous-échantillonnage", c'est-à-dire un échantillonnage au quart de la fréquence qui correspond à la définition complète des pixels. Cette branche décrit une image complète en 80 ms.

La voie "20 ms" comporte en cascade un élément de prétraitement 10 et un circuit de sous-échantillonnage 27, échantillonnant une image complète en 20 ms. Cette voie décrit une image complète, à basse définition, en 20 ms.

La voie "40 ms" comporte un élément de prétraitement 11 et un sous-échantillonneur 28. Elle transmet une image toutes les 40 ms.

Le signal d'entrée 34 est amené aussi à un circuit 25 d'estimation des vecteurs-vitesse, qui calcule la vitesse correspondant à chacune des parties d'image telles que définies plus haut. Ce circuit 25 fournit sur la connexion 21 la valeur des vecteurs-vitesse.

Un circuit de contrôle de sélection 31 reçoit à la fois la description de l'image originale par la connexion 34, les vecteurs-vitesse par la connexion 21, et la description issue de chacune des trois voies par ses entrées $S_1$, $S_2$, $S_3$. Ce circuit complexe réalise, pour chaque carré de 16x16 pixels, à partir de chacune des trois voies, un décodage simulant celui qui pourrait être fait en réception notamment à l'aide du vecteur-vitesse dans le cas de la voie "40ms", et compare avec l'image originale 34 les images décodées à partir de chacune des trois voies. La voie dont l'image décodée est la plus proche de l'image originale est choisie, un choix spécifique étant donc fait entre les trois modes pour chacun des carrés. Ce circuit de contrôle 31 fournit simultanément sur les connexions respectivement 22, 23, deux décisions concernant deux images successives.

La référence 35 désigne un bloc de codage numérique qui contient notamment les moyens pour transmettre, sur une voie numérique associée, des données définissant le mode choisi pour chacune des parties et tous les vecteurs-vitesse des parties pour lesquelles le premier mode est choisi. Il peut comporter aussi des éléments de correction des décisions issues du circuit de contrôle de sélection 31. Les vecteurs-vitesse lui sont fournis par la connexion 21, et les décisions initiales par les connexions 22, 23. Les décisions corrigées sont fournies sur les connexions 16, 17, et les éléments numériques à transmettre sur la connexion 18.

En fonction des décisions 16, 17 et à partir des signaux 41, 42, 43 fournis par les trois voies, un multiplexeur 32 transmet la voie sélectionnée sur la sortie 33 analogique à bande passante comprimée.

A l'exception du bloc de codage numérique 35, tous ces éléments font partie de l'art antérieur, et une description plus détaillée, notamment en ce qui concerne les procédés de prétraitement et d'échantillonnage, est fournie par le document cité en préambule, et aussi par le document "An-HD-MAC coding system" par F.W.P VREESWIJK et al, présenté à la conférence de l'Aquila, 29 Fev-3 mars 1988, et par la demande de brevet français n° 88-05 010, incorporés ici par référence.

L'invention peut être appliquée à l'estimateur de vitesses 25 dont le fonctionnement est basé sur un algorithme de comparaison de blocs ("BMA").

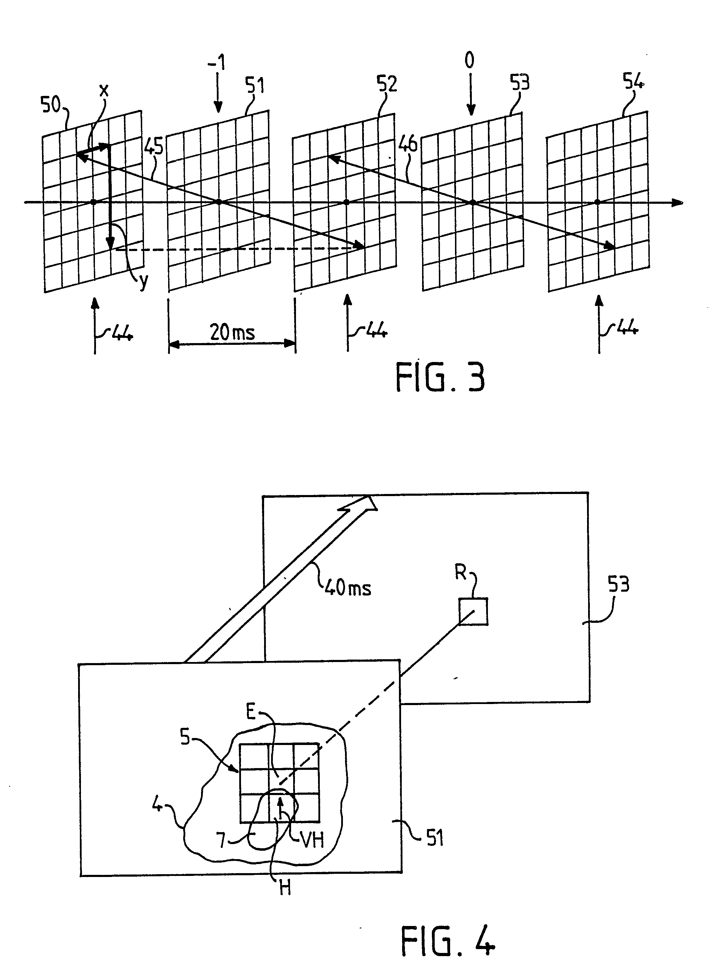

Sur la figure 3 sont représentés cinq damiers à trente six carreaux, qui symbolisent chacun les mêmes trente six pixels de cinq images originales temporellement consécutives 50 à 54. Ces images sont représentées symboliquement l'une devant l'autre en perspective, mais en réalité il n'y a qu'un seul support de visualisation : l'image 50 est celle obtenue à un instant donné et l'image 54 est celle obtenue 80 ms plus tard. Les images représentées sont celles qui interviennent toutes' dans le cadre d'un intervalle de temps de 80 ms mentionné plus haut.

Les images 50 et 54 sont à la fois la dernière image d'un intervalle, et la première image d'un autre intervalle ; elles interviennent dans chacun des intervalles desquels elles sont limitrophes. L'estimation de vitesse se fait pour le premier intervalle de 40 ms avec les trois images 50, 51, 52 puis pour le second intervalle de 40 ms avec les trois images 52, 53, 54. Les images à numéro pair "servent" donc deux fois.

Les images effectivement transmises sont indiquées par des flèches 44. Les images originales 51 et 53, disposibles en sortie de caméra, ne sont pas transmises et devront être recréées en réception, en se servant des vecteurs-vitesse. Par exemple un vecteur-vitesse ayant une amplitude horizontale x de 2 pixels par 40 ms et une amplitude verticale y de 4 pixels par 40 ms correspond au déplacement indiqué par les flèches 45 ou 46.

N'importe quel type d'estimateur de vitesses peut être utilisé pour le couple d'images 50-52. Pour le couple suivant 52-54, l'estimateur doit être du type BMA. Pour simplifier on suppose ici qu'un estimateur de type BMA est utilisé dans tous les cas.

La recherche du vecteur-vitesse consiste alors, en présence d'une première et d'une seconde image successives 50-52, a examiner une partie d'une des images, par exemple 52, en la comparant tour à tour avec une série de parties de l'autre image, par exemple 50, ces parties occupant une série de positions telles que, si elles étaient déplacées chacune selon l'un des vecteurs-vitesse envisageables, elles viendraient coïncider avec la partie examinée. Bien entendu, le vecteur-vitesse choisi à l'issue d'une telle série de comparaisons est celui qui correspond à celle des parties de la série considérée qui offre le plus de similitude avec la partie examinée de l'image 52. Un exemple de fonction exprimant une telle similitude est donné plus loin.

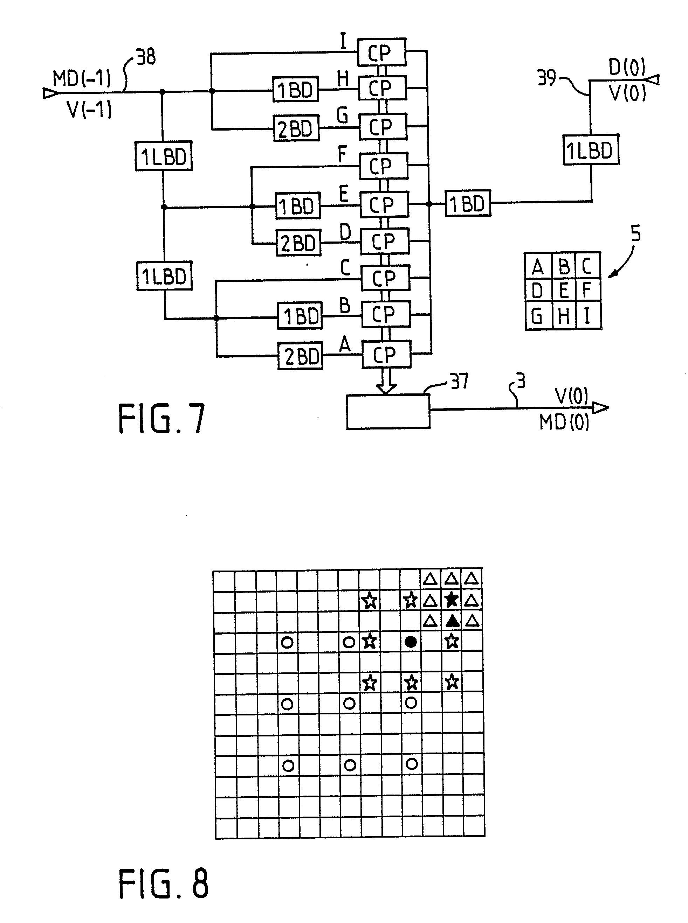

A priori , en se limitant à des vitesses de ± 6 pixels/40ms, les vecteur envisageables sont ceux illustrés par la figure 1 : il y en a 169. En pratique on ne réalise pas 169 comparaisons, grâce à un processus en trois temps qui est illustré par la figure 8, et qui consiste à explorer d'abord seulement la série de positions indiquées par des cercles sur la figure. Ensuite, en supposant que la position indiquée par le cercle noir ait donné le meilleur résultat, on explore les positions indiquées par des étoiles, et enfin les position indiquées par des triangles, autour de l'étoile qui a donné le meilleur résultat. Ainsi le nombre de comparaisons à réaliser dans le cas d'une vitesse maximale de ± 6 pixels/40ms serait de vingt cinq.

En pratique, on considère non seulement les images 50 et 52, mais aussi l'image 51, la fonction de minimisation qui exprime la similitude entre deux carrés faisant intervenir la demi-somme des différences d'intensités de pixels entre l'image 51 et l'image 50 d'une part, et entre l'image 51 et l'image 52 d'autre part. Ainsi on détermine un seul vecteur-vitesse pour un couple d'images 50, 52, et on déterminera ensuite · un autre vecteur vitesse pour le couple d'images 52, 54. C'est dans la détermination de ce deuxième vecteur-vitesse convenant pour le couple 52, 54 qu'intervient l'invention.

En présence du nouveau couple d'images 52, 54 qui suit le couple 50, 52, on procède d'une manière différente. Dans ce couple la première image 52 est aussi la seconde image du couple précédent, pour les parties de laquelle des vitesses ont déjà été déterminées par rapport à la première image 50.

Sur la figure 4 est représenté une partie R en cours d'examen dans l'image 53. A cette partie R est associé un groupe 5 de plusieurs parties de l'image précédente 51. Ce groupe contient la partie E occupant la même position que la partie R examinée, et également les huit parties voisines, qui entourent la partie E.

Alors, au lieu de considérer comme envisageables pour l'élément R tous les vecteurs-vitesse d'amplitude inférieure ou égale à ± 6 pixels, c'est-à-dire cent soixante neuf vecteurs, on ne considère que les neuf vecteurs correspondants aux neuf parties du groupe 5, ces vecteurs ayant été déterminés lors de l'examen du couple d'images 50, 52 précédent.

Ces neuf vecteurs-vitesse donnent lieu à neuf comparaisons entre la partie R et les neuf parties (non représentées) occupant des positions telles que, si elles étaient déplacées chacune selon l'un des neuf vecteurs-vitesse en question, elles viendraient coïncider avec la partie R.

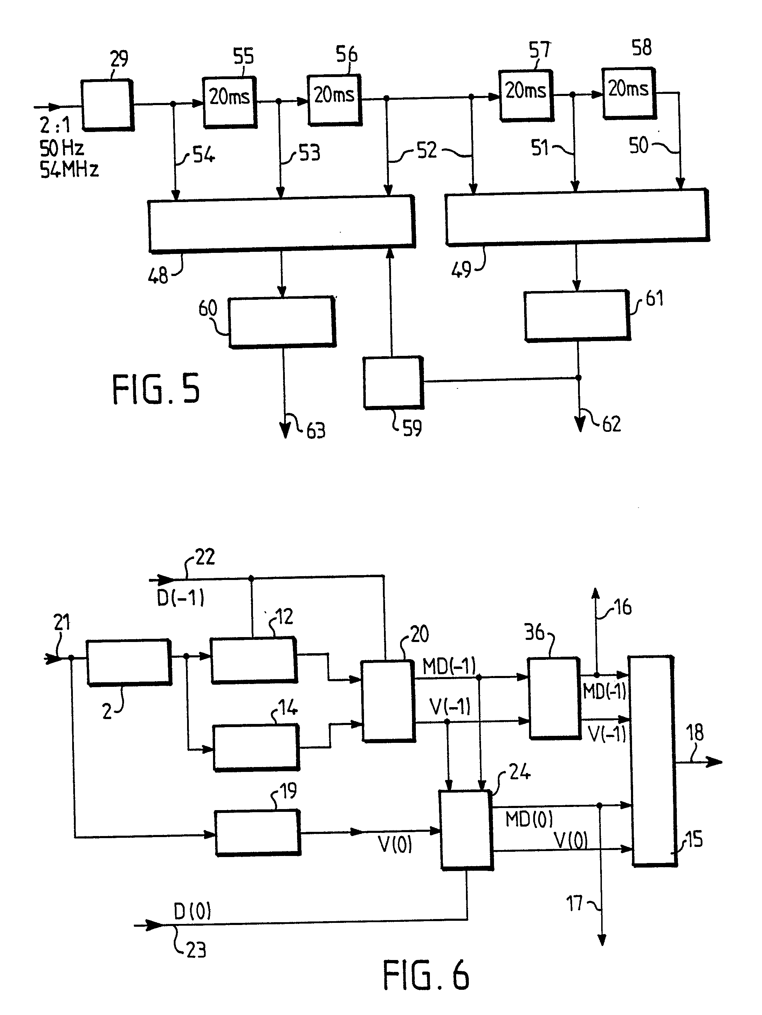

Lors' de ces comparaisons on utilise des demi-sommes de différences entre les images 52, 53, 54, comme dans le cas des images 50, 51, 52 : seul le nombre de comparaisons est différent, et le même dispositif matériel ou logiciel peut être utilisé en grande partie. Ceci apparaît dans le dispositif de la figure 5 qui permet l'estimation de vitesse selon l'invention, et qui comporte deux ensembles d'éléments semblables.

Un premier ensemble 29, 57, 58, 49, 61 est identique au dispositif de l'art antérieur tel que décrit dans le document cité en préambule. A l'entrée le filtre spatial 29 assure un préfiltrage adéquat ; deux éléments de retardement 57, 58 apportent chacun un retard de 20 ms, c'est-à-dire égal au temps entre deux images sources. Les trois connexions 50, 51, 52 portent donc chacune, au même instant, des informations concernant des parties correspondant à des images successives. (Les références de ces connexions sont les mêmes que celles des images qui leur correspondent respectivement, sur la figure 3). L'élément 49 de corrélation entre trames effectue le calcul d'une fonction C exprimant la différence entre deux parties d'image, par exemple :

$$C(V) = \sum_{j=1,\ldots N} (I(Pj,Fi) - \frac{I(Pj-V,Fi-1) + I(Pj+V,Fi+1)}{2})^2$$

où -V est le numéro d'ordre du vecteur considéré parmi ceux envisageables.
-N est le nombre de pixels d'une partie d'image
-I (Pj, Fi) est l'intensité du pixel Pj de la trame Fi
-Pj±V est le pixel décalé par rapport à Pj d'une quantité correspondant au vecteur V.

L'élément 61 enregistre toutes les valeurs de C(V) déterminées par l'élément 49 et indique laquelle est la plus faible.

Selon l'invention, le dispositif est complété par un autre ensemble comprenant deux éléments de retard 55, 56 de façon à traiter les cinq images de la figure 3 à la fois, et un deuxième jeu d'éléments 48, 60 correspondant respectivement aux éléments 49, 61. Le jeu 49, 61 traite les parties d'images 50, 51, 52 pendant que le jeu 48, 60 traite les parties d'images 52, 53, 54. Les résultats des groupes d'images 50-52 et 52-54 sont fournis respectivement sur les connexions de sortie 62, 63.

L'élément 59 est constitué d'éléments de retardement, dont le principe sera expliqué plus en détail ci-après à l'aide de la figure 7, qui permettent de présenter en même temps les neuf vecteurs des éléments du groupe 5 de la figure 4, et de les fournir à l'élément 48. L'élément 48 est différent de l'élément 49 en ce que, au lieu de considérer tous les vecteurs envisageables (voir figure 2), il ne considère que les neuf vecteurs que lui fournit l'élément 59. Les deux éléments 49, 48 travaillent l'un après l'autre puisque l'un a besoin des résultats de l'autre pour travailler.

Pour deux couples d'images successifs, les comparaisons portent sur vingt-cinq vecteurs-vitesse par partie d'image pour le premier couple 50, 52, et sur neuf vecteurs-vitesse pour le deuxième couple 54, 52, soit au total 34 comparaisons, au lieu de 2 x 25 = 50 dans l'art antérieur. Le gain est important est permet par exemple de traiter des vecteurs-vitesses d'amplitude maximale plus grande, avec un matériel de performance donnée. Quand l'amplitude maximale grandit, le gain de temps apporté par l'invention tend vers deux.

Ce dispositif fonctionne très bien pour les raisons suivantes :
- considérons le groupe de neuf carrés comprenant le carré E (figure 4) et les carrés voisins. Si l'image comporte un objet 4, plus grand que le groupe et qui le recouvre, cet objet se déplaçant d'un seul bloc, toutes les vitesses correspondant aux neuf parties sont les mêmes, et si l'objet 4 recouvre toujours le carré R dans l'image suivante et que sa vitesse n'a pas varié, la vitesse correspondant au carré R est aussi la même. La vitesse correspondant à la partie R de l'image 53 est égale à celle correspondant à n'importe lequel des neuf carrés de l'image 51, le carré central, par exemple. Ce cas est assez fréquent.
- il se peut aussi que devant un arrière plan immobile se déplace un petit objet, par exemple un objet 7, recouvrant le carré H, muni d'une vitesse VH de coordonnées x, y. Supposons d'abord que x = 0, y = 16. Ce n'est qu'un cas d'école, mais son analyse est très simple. Après un délai de 40 ms, l'objet, conservant la même vitesse, a monté de 16 pixels : il recouvre le carré R dans l'image 53. On définit alors la vitesse du carré R en indiquant qu'elle est égale à celle du carré H de l'image 51 (le terme "vitesse du carré" doit être compris comme "vitesse de l'objet occupant le carré") .

Si, de façon plus générale, la vitesse est par exemple de x = 0, y = 4, il faut quatre fois 40ms pour que l'objet 7 monte d'un carré. Tant qu'il n'occupe qu'une surface très minoritaire du carré R, où le fond est par exemple immobile, la vitesse de ce carré R est zéro : c'est celle du carré E de l'image 51. Lorsque l'objet occupe une proportion moyenne du carré R de l'image 53, il se peut qu'aucun vecteur-vitesse ne soit approprié : alors on passe en mode "20ms" pour ce carré. A partir du moment où l'objet occupe une surface très majoritaire du carré R, la vitesse pour ce carré devient celle de l'objet 7, c'est-à-dire celle du carré H de l'image 51 (en supposant l'objet assez grand pour recouvrir les deux carrés à la fois).

On a donc ainsi découvert un moyen de pouvoir déterminer dans la plupart des cas la vitesse correspondant à une partie d'une image par rapport à des parties de l'image précédente, dont les données ont déjà été déterminées. Comme les vecteurs les plus grands que l'on accepte de considérer dans le mode "40ms" sont inférieurs à 16 pixels/40ms, un objet ne peut pas, en 40ms, venir d'un carré plus éloigné que le carré voisin. Il est donc inutile de considérer plus de neuf carrés dans l'image 51.

La détermination du vecteur-vitesse dans les images 52-54 résulte d'un processus de minimisation. On a donc trouvé la vitesse la plus probable parmi celles envisagées. Il faut encore vérifier que l'image décodée qui en découle est la meilleure.

A cet effet des moyens sont prévus pour réaliser un décodage simulant le décodage en réception et déterminer, par comparaison entre l'image décodée et l'original, le degré de qualité de la partie du deuxième couple d'images en cours de traitement, munie du vecteur vitesse déterminé comme décrit ci-dessus. Ces moyens sont simplement constitués par le circuit de contrôle de sélection 31 qui traite les parties d'images 52-54, avec leur vecteur-vitesse déterminé selon l'invention, exactement de la même façon qu'il traite les parties d'images 50-52 de façon connue.

En outre, l'invention permet aussi de réaliser la transmission des vecteurs-vitesse d'un deuxième couple d'images tel que 52, 54 avec un débit numérique réduit, et ceci indépendamment du fait que l'on ait ou non fait usage de l'invention dans l'estimateur de vitesses.

Le calcul du débit numérique nécessaire va être exposé maintenant : pour remplir chaque intervalle de 80 ms qui est traité comme un tout, il y a seulement cinq cas possibles :

1 - soit avec une seule image "80 ms"

2 - soit avec une image "40 ms" suivie de deux images "20 ms"

3 - soit avec deux images "20 ms" suivies d'une image "40 ms".

4 - soit avec deux images "40 ms"

5 - soit avec quatre images "20 ms". Pour chaque intervalle de 80 ms, la définition du cas utilisé parmi les cinq cas décrits ci-dessus, ainsi que des données associées à chacun des modes, doivent être transmises aux récepteurs. Le nombre de bits nécessaire dépend du nombre de situations possibles : le premier cas 1 correspond à une seule situation. Il en est de même pour le cas 5. Par contre, dans les cas 2 et 3 qui comprennent un mode "40 ms", il faut transmettre en plus la valeur du vecteur vitesse.

Supposons d'abord que l'invention n'est pas mise en oeuvre. Soit un vecteur-vitesse avec une amplitude maximale (dans chaque direction verticale/horizontale) de ± 6 pixels. Ceci correspond à $13^2$ = 169 vecteurs possibles, soit 169 situations possibles (voir la figure 1).

Dans le cas 4, il faut définir deux vecteurs (un pour chacune des deux périodes de 40 ms), ce qui correspond à 169 premiers vecteurs x 169 seconds vecteurs, soit $169^2$ situations.

Le nombre total de situations correspondant aux cinq cas, est la somme des situations dans chaque cas, soit :

| Cas 1 | : | 1 |
|-------|---|---|
| Cas 2 | : | 169 |
| Cas 3 | : | 169 |
| Cas 4 | : | $169^2$ = 28561 |
| Cas 5 | : | 1 |
| Total | | 28901 |

Une situation parmi 28901 peut être définie au moyen de 15 bits.

Ces 15 bits doivent être redéfinis pour chacune des parties de l'image. Si ces parties sont des carrés de 16 x 16, dans une image de 1440 x 1152 pixels, il y a 6480 parties. En outre il y a 12,5 intervalles de 80 ms par seconde. Au total un débit de 15 bits x 6480 carrés x 12,5 intervalles = 1215000 bits/seconde, sera nécessaire. Ce débit est supérieur à ce qu'il est prévu d'allouer à ce type d'informations dans, par exemple, le standard D2 MAC-paquets (environ 1Mbits/s pendant les retours de trame).

On est donc obligé, dans l'art antérieur, de limiter les vecteurs à ± 3 pixels. En effet il y a alors pour chaque carré $7^2$ = 49 vecteurs possibles, et au total pour décrire les cinq cas : 1 + 49 + 49 + $49^2$ + 1 = 2501 situations, que 12 bits peuvent décrire. Le débit est alors de 12 x 6480 x 12,5 = 972000 bits/sec, ce qui est admissible. Mais il est regretable de limiter la grandeur des vecteurs-vitesse utilisables au détriment de la qualité de l'image. On a donc cherché un moyen de transmettre des vecteurs de ± 6 pixels, ou même plus grands encore, avec un débit numérique maximal disponible d'environ 1M bits/seconde.

Supposons que tous les vecteurs-vitesses aient été évalués pour toutes les images, avec ou sans l'estimateur de vitesse selon l'invention, et que le circuit 31 de contrôle de sélection ait choisi le mode 40ms pour une partie d'image de la deuxième période de 40ms d'un intervalle de 80ms. Le système étant muni de moyens semblables à ceux décrits plus haut à l'aide de la figure 4, ces moyens associent les neuf parties 5 d'une image de la première période de l'intervalle de 80ms à la partie R de la deuxième image de cet intervalle. Des moyens sont prévus pour rechercher si l'un des neuf vecteurs-vitesse des parties 5 pourrait convenir pour la partie R. On peut choisir de rechercher l'identité totale ou seulement un écart inférieur à un seuil prédéterminé.

S'il y a identité totale entre un vecteur-vitesse d'une partie du groupe 5 et le vecteur-vitesse de la partie R, on peut confirmer le choix du mode 40ms pour la partie R de la seconde période de l'intervalle de 80ms, et transmettre la valeur du vecteur-vitesse correspondant, non pas par référence aux 169 jeux de coordonnées possibles (figure 1), mais tout simplement en indiquant pour quel élément du groupe 5 la comparaison a été positive. Il y a ainsi neuf possibilités seulement, au lieu de cent soixante neuf, et le débit numérique peut être considérablement réduit.

Si l'on a choisi de rechercher seulement l'écart le plus faible ou un écart inférieur à un seuil prédéterminé, du fait de la différence alors possible entre le "vrai" vecteur du carré R et celui du carré du groupe 5 qu'on veut utiliser à sa place, il se peut que le mode "40ms" ne soit plus le meilleur pour la partie R. Il faut alors prévoir des moyens pour déterminer, par comparaison entre l'image décodée et l'original, le choix du mode le plus satisfaisant pour la partie examinée munie du vecteur-vitesse de l'élément du groupe 5 qui est le plus proche de celui de l'élément R.

Dire qu'on est dans le mode "40ms" pour la deuxième phase d'un intervalle de 80ms signifie qu'on est dans l'un des cas 3 ou 4 mentionnés plus haut : le cas 3 est possible aussi car, même si l'on on a choisi le mode "20ms" pour l'élément E durant la première phase de l'intervalle, des comparaisons sont néanmoins susceptibles d'être réalisées avec d'autres parties voisines de E dans le groupe 5, pour lesquelles le mode "40ms" a été choisi dans la première phase.

Bien entendu ces moyens sont à nouveau ceux du circuit de contrôle 31 (figure 2) et, dans le cas où ils confirmeraient le choix du mode 40ms pour la partie R, la valeur du vecteur-vitesse est transmise comme précédemment en indiquant pour quel élément du groupe 5 la comparaison a été positive.

Dans le cas où aucune comparaison n'est positive, on pourrait transmettre le vecteur-vitesse du carré R par ses coordonnées, mais ce procédé présente l'inconvénient que le débit numérique nécessaire est plus grand et imprévisible. Il est donc à la fois plus simple et plus satisfaisant de repasser dans le mode "20ms".

Dans le cas où l'estimateur de vitesses BMA faisant usage de l'invention a été utilisé, la transmission du vecteur-vitesse est bien entendu basée sur le même principe, c'est-à-dire que les moyens de transmission indiquent pour l'image de la deuxième période, quel est celui des élément du groupe 5 qui a fourni le vecteur-vitesse optimal.

Le nombre total de situations pour les cinq cas exposés plus haut est maintenant :

| Cas 1 | : | 1 |
|-------|---|-----------|
| Cas 2 | : | 169 |
| Cas 3 | : | 169 (ou 9) |
| Cas 4 | : | 169 x 9 |
| Cas 5 | : | 1 |
|       |   | 1861 |

Une situation parmi 1861 peut être définie au moyen de 11 bits, ce qui correspond maintenant à un débit de 891 000 bits/seconde, tout à fait compatible avec la capacité offerte par les retours trame des standards D et D2MAC-paquet.

Les récepteurs de télévision destinés à exploiter des données numériques associées permettant de traiter une image sont munis de mémoires de pixels, et dans le cas où des vecteurs-vitesse sont prévus, les récepteurs sont aussi munis de mémoires pour enregistrer ces vecteurs. De ce fait il est possible de retrouver les vecteurs-vitesse de l'image précédente, au niveau du récepteur, avec les moyens de mémoire prévus normalement. Le seul élément à rajouter pour mettre en oeuvre l'invention est un élément processeur très simple qui, à partir de la connaissance de la partie d'image en cours de traitement et du nombre, reçu de l'émetteur, désignant une des neuf parties de l'image précédente (selon la description ci-dessus), calcule l'adresse mémoire où se trouve le vecteur-vitesse de la partie désignée, déclenche sa lecture, et l'inscrit comme vecteur-vitesse de la partie courante. En pratique, le récepteur étant muni d'un système processeur qui réalise des opérations numériques portant sur les parties d'images, l'élément additionnel ci-dessus est réalisé par des moyens logiciels, que l'homme du métier peut réaliser facilement.

9

Pour gagner encore sur le débit de données, le système d'émission peut en outre comporter des moyens pour déterminer dans l'ensemble des vecteurs-vitesse, lors du traitement de l'image 51 dite précédente, associée aux images 50, 52, un sous-ensemble contenant les vecteurs-vitesse qui sont rencontrés le plus souvent et pour transmettre une fois par image les caractéristiques de tous les vecteurs-vitesse de ce sous-ensemble, le vecteur-vitesse de chaque partie d'image étant ensuite défini par référence à ce sous-ensemble. Si le vecteur-variation d'une partie d'image à transmettre n'est pas un élément de ce sous-ensemble, le deuxième mode est utilisé pour cette partie d'image.

Avec cette disposition, le débit numérique nécessaire pour définir la première image 51 est encore réduit. En contre partie, il se peut qu'un ou plusieurs des carrés du groupe 5 aient été traités en mode "20ms" dans l'image 51 (parceque leurs vecteurs-vitesse ne font pas partie dudit sous-ensemble) alors que le carré R de l'image 53 peut, lui, être traité en mode "40ms". On ne renonce pas pour autant à appliquer l'invention, mais on limite alors la recherche d'identité à ceux des carrés du groupe 5 qui ont été traités en mode 40ms.

Ces moyens peuvent être mis en oeuvre grâce au circuit de la figure 6, qui est une partie du bloc de codage numérique 35 de la figure 2.

Les indices 0 et -1 utilisés dans cette figure font référence respectivement à une image et à l'image précédente.

Les décisions (de choix entre les trois modes) D(-1) et D(0) issues du circuit de contrôle de sélection 31 de la figure 2 sont amenés pour les connexions 22, 23. Les vecteurs-vitesse sont fournis sur la connexion 21.

Le signal de vecteur-vitesse traverse un circuit 2 apportant un retard de 40ms, pour mettre en phase chaque vecteur de l'image 0 avec celui de l'image -1. Un circuit 12 reçoit ce vecteur-vitesse retardé et aussi la décision D(-1) de choix d'une parmi les trois voies, concernant l'image -1. Le circuit 12 est un élément processeur qui, à l'issue de la description complète d'une image, établit un classement des vecteurs-vitesse par ordre de fréquence d'occurrence, et fournit à un élément 20 la description du sous-ensemble des vecteurs les plus fréquents. Le signal vecteur-vitesse présent à l'entrée du circuit 12 est transmis à l'élément 20 par un circuit 14 de retard, qui correspond au temps utilisé par le processeur 12 pour établir le classement. L'élément 20 détermine si le vecteur-vitesse transmis par le circuit 14 fait partie du sous-ensemble délivré par le processeur 12. Si ce n'est pas le cas, la décision D(-1) est éventuellement modifiée pour imposer le choix de la voie "20ms". Le signal de choix final modifié est référencé MD(-1). Si le mode "40ms" est choisi (le vecteur-vitesse fait partie du sous-ensemble), le numéro du vecteur-vitesse correspondant V(-1) est fourni. Le choix effectué au moyen des éléments 12, 14, 20 est celui concernant la première image "40ms" d'un intervalle de 80ms.

Au travers d'un circuit 19 de compensation de retard correspondant à la durée des divers traitements exécutés dans les éléments 12, 20, le vecteur vitesse est amené à l'élément 24. La décision D(0) concernant l'image 0, sur la connexion 23, est amenée aussi à l'élément 24, aussi à l'élément 24, ainsi que la décision MD(-1) et le vecteur V(-1).

L'élément 24 est décrit plus en détail à la figure 7. Il fournit finalement la décision MD(0) et éventuellement le vecteur V(0) au circuit de mise en forme 15 qui reçoit d'une part la description des sous-ensembles de vecteurs-vitesse à transmettre une fois par période de 80ms, puis pour chaque partie d'image la décision MD(-1) et la décision MD(0), ainsi que éventuellement les deux vecteurs-vitesse correspondants V(0) et V(-1). L'élément 36 est un élément de retard qui compense les délais introduits par l'élément 24.

L'élément 15 met les données en forme et les fournit sur la sortie 18 pour être émises selon un format prédéterminé sur le canal numérique de transmission.

Le circuit de l'élément 24 détaillé sur la figure 7 reçoit les décisions et -le cas échéant- les vecteurs correspondants sur les connexions 38, 39 respectivement pour les images -1 et 0. Le groupe 5 de la figure 4 est reproduit à droite de la figure 7 avec des références de A à I pour chaque partie. Des éléments marqués 1BD, 2BD, et 1LBD sont des éléments de retard apportant un retard, respectivement, de une partie d'image ("block delay" en langue anglaise), deux parties d'images, et une ligne de parties d'image ("line of block delay" en langue anglaise). Autrement dit "1BD" est le temps pour passer par exemple d'une partie A à une partie B, "2BD" pour passer d'une partie A à une partie C, et "1LBD" pour passer d'une partie A à une partie D. Grâce au schéma représenté, dont le fonctionnement basé sur l'apport de retards appropriés est évident, les données concernant les parties A à I du bloc 5 sont amenées toutes au même moment sur les connexions référencées de façon correspondante, de A à I.

Un circuit du même genre est utilisé dans l'élément 59 de la figure 5 pour amener ensemble les données des neuf parties du groupe 5 au circuit de calcul 48.

Dans le circuit de la figure 7, chaque élément marqué "CP" realise la comparaison entre les coordonnées des vecteurs-vitesse présents sur ses deux entrées, latérales sur le dessin. Le résultat des comparaisons est transmis via un bus commun de tous les blocs "CP" vers un élément de décision 37 qui fournit sur la connexion 3 la décision corrigée MD(0) pour l'image examinée (qui est par exemple l'image 53 de la figure 3). Si aucune comparaison n'est positive, la décision MD(0) est le choix du mode "20ms", sinon le mode "40ms" est confirmé et le vecteur-vitesse est transmis au moyen d'un chiffre qui désigne lequel des éléments "CP" correspondant aux connexions A à I a fourni une comparaison positive.

Une comparaison peut être jugée positive s'il y a identité absolue entre les coordonnées des vecteurs-vitesse comparés. Dans ce cas aucune nouvelle vérification de l'adéquation du mode "40ms" n'est requise.

Le critère de comparaison peut aussi être que la différence entre les vecteurs-vitesse comparée est inférieure à un seuil prédéterminé. Dans ce cas il faut encore réaliser un décodage simulant le décodage en réception et déterminer, par comparaison entre l'image décodée et l'original, le choix du mode le plus satisfaisant pour la partie examinée, munie du vecteur-vitesse déterminé avec les moyens décrits à l'aide de la figure 7. Cette décision est avantageusement prise au moyen de l'élément 31 qui a déjà réalisé la même comparaison entre l'image décodée et l'original pour les décisions initiales D(0) et D(-1).

Si la méthode statistique décrite ci-dessus pour réduire le nombre de vecteurs à transmettre pour le premier couple d'images d'une période de "80ms" n'est pas utilisée, les éléments 12, 14, 20 de la figure 6 disparaissent, la décision D(-1) étant amenée sans correction à l'élément 24.

Si en outre les moyens décrits à l'aide de la figure 5 sont utilisés, les circuits des figures 6 et 7 deviennent inutiles, puisque la première décision prise par le circuit de contrôle de sélection 31 porte d'emblée sur un vecteur-vitesse choisi parmi neuf, pour ce qui concerne le deuxième couple d'images, et le circuit de codage numérique 35 de la figure 2 se réduit à un circuit de mise en forme des données.

## Revendications

1. Système de traitement d'images de télévision, dans lequel les images sont divisées en plusieurs parties pour chacune desquelles un mode de transmission des données vidéo faisant usage d'un vecteur-vitesse est susceptible d'être utilisé, le système étant muni par conséquent d'un estimateur de vitesse pour déterminer un vecteur-vitesse pour chacune des parties d'une image, et de moyens pour transmettre sur une voie de transmission numérique associée des données définissant tous les vecteurs-vitesse des parties pour lesquelles un tel vecteur est utilisé, caractérisé en ce que l'estimateur de vitesses comporte des moyens pour, en présence d'une série d'images se succédant au cours du temps, associer à une partie examinée dans une image un groupe de plusieurs parties d'une image antérieure, groupe qui contient la partie occupant la même position géométrique que la partie examinée ainsi que les parties voisines, et des moyens pour choisir le vecteur-vitesse pour la susdite partie examinée parmi ceux déterminés pour les différentes parties du susdit groupe, dans l'image antérieure.

2. Système selon la revendication 1, caractérisé en ce que des moyens y sont prévus pour réaliser un décodage simulant le décodage en réception et déterminer, par comparaison entre l'image décodée et l'original, le degré de qualité de la partie d'image en cours de traitement, munie du vecteur vitesse choisi.

3. Système selon l'une des revendication 1 ou 2, caractérisé en ce qu'il est muni de moyens de transmission de la vitesse qui indiquent quelle est la partie du susdit groupe dont le vecteur-vitesse correspondant à l'image antérieure a été choisi pour la partie examinée.

4. Système de traitement d'images de télévision, dans lequel les images sont divisées en plusieurs parties pour chacune desquelles est choisi un mode de transmission des données vidéo parmi au moins deux modes qui diffèrent l'un de l'autre par la structure d'échantillonnage, le premier mode faisant usage d'un vecteur-vitesse cependant que, dans le deuxième mode, une image est décrite plus vite que dans le premier mode, mais avec une définition spatiale inférieure, le système étant muni par conséquent de moyens pour déterminer un vecteur-vitesse pour chacune des parties d'image, et de moyens pour transmettre, sur une voie numérique associée, des données définissant le mode choisi pour chacune des parties et tous les vecteurs-vitesse des parties pour lesquelles le premier mode est choisi, caractérisé en ce qu'il est muni de moyens pour, lors de l'examen d'une partie d'image pour laquelle le premier mode a été jusqu'à présent choisi, associer à cette partie un groupe de plusieurs parties d'une image antérieure, groupe qui contient la partie occupant la même position que la partie examinée ainsi que les parties voisines, et de moyens pour rechercher si l'un des vecteurs-vitesse déterminés pour les parties de l'image antérieure qui font partie dudit groupe peut convenir pour ladite partie examinée et dans ce cas confirmer le choix du premier mode et transmettre une donnée identifiant quel est l'élément du groupe dont le vecteur-vitesse de l'image antérieure convient pour la partie examinée, et dans le cas contraire, c'est-à-dire lorsqu'aucun vecteur dudit groupe ne peut convenir, déclencher le choix du deuxième mode pour la

EP 0 347 984 A1

transmission de la partie examinée.

5. Système selon la revendication 4, caractérisé en ce qu'un vecteur-vitesse est jugé pouvoir convenir s'il y a identité entre ses coordonnées et celles du vecteur-vitesse déterminé pour la partie examinée.

6. Système selon la revendication 4, caractérisé en ce que le vecteur-vitesse du groupe de l'image antérieure dont la différence avec le vecteur-vitesse déterminé pour la partie examinée est la plus faible ou bien est inférieure à un seuil prédéterminé est jugé pouvoir convenir si des moyens, prévus pour réaliser un décodage simulant le décodage en réception et déterminer, par comparaison entre l'image décodée et l'original, le choix du mode le plus satisfaisant pour la partie examinée munie dudit vecteur-vitesse du groupe de l'image antérieure, confirment que le premier mode peut être choisi.

7. Système selon l'une quelconque des revendications 4 à 6, caractérisé en ce qu'il comporte des moyens pour déterminer, lors du traitement de l'image dite antérieure, dans l'ensemble des vecteurs-vitesse, un sous-ensemble contenant les vecteurs qui sont rencontrés le plus souvent dans cette image, et des moyens pour transmettre numériquement une fois par image les caractéristiques de tous les vecteurs de ce sous-ensemble, en ce que si le vecteur-vitesse d'une partie d'image dite antérieure est un élément du sous-ensemble, le premier mode est utilisé pour cette partie d'image et le vecteur-vitesse est défini par référence au sous-ensemble, alors que si ce vecteur-vitesse n'est pas un élément du sous-ensemble, le deuxième mode est utilisé, et en ce que, lors du susdit examen d'une partie d'image pour laquelle le premier mode a été jusqu'à présent choisi, le contenu du susdit groupe de parties de l'image antérieure est limité aux parties pour lesquelles le premier mode a été utilisé.

8. Appareil de reproduction d'images de télévision, dans lequel les images sont divisées en plusieurs parties pour chacune desquelles un mode de reproduction des données vidéo faisant usage d'un vecteur vitesse est susceptible d'être utilisé, la définition du vecteur-vitesse étant reçue pour chacune des parties d'image à traiter dans ce mode, récepteur muni de moyens pour créer, à partir des vecteurs-vitesse, une image intermédiaire entre deux images reçues consécutivement, ces moyens comprenant notamment une ou plusieurs mémoires pour enregistrer les coordonnées des vecteurs-vitesse, caractérisé en ce qu'il est muni en outre de moyens pour, lors de la création d'une partie d'une image, à partir d'une donnée numérique reçue, identifiant une partie d'une image antérieure, trouver le vecteur-vitesse de l'image antérieure, correspondant à cette partie, dans ladite mémoire, et l'appliquer à la partie en cours de création.

9. Procédé de traitement d'images de télévision, dans lequel les images sont divisées en plusieurs parties pour chacune desquelles un mode de transmission des données vidéo faisant usage d'un vecteur-vitesse est susceptible d'être utilisé, selon lequel on examine chacune des parties d'une image pour y déterminer un vecteur-vitesse, et on transmet sur une voie de transmission numérique associée des données définissant tous les vecteurs-vitesse des parties pour lesquelles un tel vecteur est utilisé, caractérisé en ce qu'en présence d'une série d'images se succédant au cours du temps, on associe à une partie examinée dans une image un groupe de plusieurs parties d'une image antérieure, groupe qui contient la partie occupant la même position géométrique que la partie examinée ainsi que les parties voisines, et on choisit le vecteur-vitesse pour la susdite partie examinée parmi ceux déterminés pour les différentes parties du susdit groupe, dans l'image antérieure.

10. Procédé de traitement d'images de télévision, dans lequel les images sont divisées en plusieurs parties pour chacune desquelles est choisi un mode de transmission des données vidéo parmi au moins deux modes qui diffèrent l'un de l'autre par la structure d'échantillonnage, le premier mode faisant usage d'un vecteur-vitesse cependant que, dans le deuxième mode, une image est décrite plus vite que dans le premier mode, mais avec une définition spatiale inférieure, procédé selon lequel on examine chacune des parties d'image pour y déterminer un vecteur-vitesse et on transmet, sur une voie numérique associée, des données définissant le mode choisi pour chacune des parties et tous les vecteurs-vitesse des parties pour lesquelles le premier mode est choisi, caractérisé en ce que, lors de l'examen d'une partie d'image pour laquelle le premier mode a été jusqu'à présent choisi, on associe à cette partie un groupe de plusieurs parties d'une image antérieure, groupe qui contient la partie occupant la même position géométrique que la partie examinée ainsi que les parties voisines, et on recherche si l'un des vecteurs-vitesse déterminés pour les parties de l'image antérieure qui font partie dudit groupe peut convenir pour ladite partie examinée et dans ce cas on confirme le choix du premier mode et on transmet une donnée identifiant quel est l'élément du groupe dont le vecteur-vitesse de l'image antérieure convient pour la partie examinée, et dans le cas contraire, c'est-à-dire lorsqu'aucun vecteur dudit groupe ne peut convenir, on déclenche le choix du deuxième mode pour la transmission de la partie examinée.

12

FIG. 1

FIG. 2

FIG. 3

FIG. 4

## FIG. 5

Input: 2:1 50 Hz 54 MHz

29 → 55 (20ms) → 56 (20ms) → 57 (20ms) → 58 (20ms)

54, 53, 52, 51, 50

48, 49

60, 61, 59

63, 62

## FIG. 6

22 D(−1)

21 → 2 → 12

14

19

20 MD(−1), V(−1)

36 MD(−1), V(−1)

16

24 MD(0), V(0)

15, 18, 17

V(0)

D(0) 23

FIG.7

FIG.8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | WO-A-8 704 034 (BRITISH BROADCASTING CORP.) * Page 2, ligne 14 - page 3, ligne 21; page 6, lignes 5-15; page 6, ligne 33 - page 7, ligne 8; page 11, lignes 31-35; page 12, ligne 29 - page 13, ligne 31; page 14, lignes 8-20; page 14, lignes 32-34 * | 1-4,6-10 | H 04 N 7/00 H 04 N 7/13 |
| A | WO-A-8 705 770 (BRITISH BROADCASTING CORP.) * Page 5, ligne 13 - page 7, ligne 31 * | 1-4,6-10 | |
| A | ELECTRONICS LETTERS, vol. 21, no. 7, 28 mars 1985, pages 289-290, Stevenage, Herts, GB; S.C. WELLS: "Efficient motion estimation for interframe video coding applications" * Page 289, colonne de driote, ligne 15 - page 290, colonne de droite, ligne 25 * | 1,4,8-10 | |
| A | US-A-4 307 420 (YUICHI NINOMIYA et al.) * Colonne 4, lignes 19-60 * | 1,4,8-10 | **DOMAINES TECHNIQUES RECHERCHES (Int. Cl.4)** H 04 N |
| A | I.E.E.E. TRANSACTIONS ON COMMUNICATIONS, vol COM-35, no. 10, octobre 1987, pages 1069-1082, IEEE, NEW York, US; HIROHISA YAMAGUCHI: Movement-compensated frame-frequency conversion of television signals" * Page 1073, ligne 19 - page 1075, colonne de gauche, ligne 10; figures 5,6 * | 1,4,8-10 | |

Le présent rapport a été établi pour toutes les revendications

| Lieu de la recherche | Date d'achèvement de la recherche | Examinateur |
|---|---|---|
| LA HAYE | 25-08-1989 | BOSCH F.M.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)